Europäisches Patentamt

European Patent Office

Office européen des brevets

(11) Publication number: 0 340 988 A2

# EUROPEAN PATENT APPLICATION

(21) Application number: 89304302.6

(51) Int. Cl.4: G06K 19/08

(22) Date of filing: 28.04.89

(30) Priority: 30.04.88 JP 108163/88

(43) Date of publication of application:
08.11.89 Bulletin 89/45

(84) Designated Contracting States:
DE FR GB NL

(71) Applicant: SHARP KABUSHIKI KAISHA
22-22 Nagaike-cho Abeno-ku
Osaka 545(JP)

(72) Inventor: Miyake, Takahiro
Akebono-ryo, 2613-1 Ichinomoto-cho
Tenri-shi Nara-ken(JP)
Inventor: Kobayashi, Shozo
2-3-305, Sanjokawanishi-cho
Nara-shi Nara-ken(JP)
Inventor: Ohta, Kenji
3-9-17, Hirosedai Kawai-cho
Kitakatsuragi-gun Nara-ken(JP)
Inventor: Maeda, Shigemi
2996-18, Koizumi-cho
Yamatokoriyama-shi Nara-ken(JP)
Inventor: Ishikawa, Toshio
1-16-9, Nishichiyogaoka
Nara-shi Nara-ken(JP)

(74) Representative: Jones, Colin et al
W.P. THOMPSON & CO. Coopers Building
Church Street
Liverpool L1 3AB(GB)

(54) A memory card and an apparatus for processing the same.

(57) A memory card comprising a memory medium on which at least one of the record, reproduction and erasure of information can be conducted. The memory card further comprises an indicating means the state of which can be altered in accordance with the condition whether the memory medium is permitted or not to be subjected to at least one of the record, reproduce and erase of information. An apparatus for processing the memory card comprises a detection means for detecting the state of the indicating means.

Fig. 3

## A MEMORY CARD AND AN APPARATUS FOR PROCESSING THE SAME

The present invention relates to a memory card in which information can be recorded, erased or reproduced, and to an apparatus for processing the memory card.

Recently, various kinds of memory cards having a memory medium in which information can be recorded, erased or reproduced have been widely used. Such memory cards include a magnetic card, the memory medium of which consists of a ferromagnetic material, an IC card the memory medium of which is an IC, and an optical card, the memory medium of which consists of a magnetooptical material. These memory cards have advantages in that they are portable, and that they can store a large amount of information.

Such a memory card has another advantage in that information can be recorded, erased or reproduced as the holder of the card requires (hereinafter, the operation of conducting at least one of the record, erase and reproduction of information against a memory card is referred to as "the memory operation"). However, this advantage causes disadvantages that, when the holder of the card erroneously operates an apparatus for processing a memory card, information which should be kept stored may be erased, and that, when another person handles the card, unnecessary information may be recorded on the card.

The memory card of this invention, which aims to overcome the above-discussed and numerous other disadvantages and deficiencies of the prior art, comprises a memory medium on which at least one of the record, reproduction and erasure of information can be conducted, and is characterised by an indicating means the state of which can be altered in accordance with the condition whether or not said memory medium is permitted to be subject to at least one of the record, reproduction and erasure of information.

In a preferred embodiment, the indicating means comprises one or more holes.

In a preferred embodiment, one or more holes can be closed to show that said at least one of the record, reproduction and erasure of information is not permitted.

In a preferred embodiment, the indicating means comprises one or more tab-like pieces which can be removed from said card.

In a preferred embodiment, the indicating means is formed in said memory medium.

In a preferred embodiment, the indicating means comprises one or more printed marks.

In a preferred embodiment, the indicating means further comprises a cover means for covering said printed marks.

In a preferred embodiment, the memory medium consists of a magnetooptical material.

In a preferred embodiment, the memory medium consists of a ferromagnetic material.

In a preferred embodiment, the memory medium comprises a semiconductor memory.

An apparatus in accordance with the present invention for processing the above-mentioned cards is characterised by detection means for detecting the state of the indicating means of the cards.

Thus, the invention described herein makes possible the objectives of:

(1) providing a memory card which can prevent information stored therein from being unduly reproduced, and/or erased from the card;

(2) providing a memory card which can prevent unnecessary information from being unduly recorded into the card;

(3) providing a memory card on which the memory operation can be prohibited;

(4) providing an apparatus for processing a memory card which can prevent information stored in the card from being unduly reproduced, and/or erased from the card;

(5) providing an apparatus for processing a memory card which can prevent unnecessary information from being recorded into the card; and

(6) providing an apparatus for processing a memory card in which the memory operation can be prohibited.

By way of example only, specific embodiments of the present invention will now be described, with reference to the accompanying drawings, in which:-

Figs. 1A and 1B show a first embodiment of memory card in accordance with the present invention;

Figs. 2A and 2B show a second embodiment of memory card in accordance with the present invention;

Fig. 3 shows diagrammatically an apparatus for processing the memory card of Figs. 1A and 1B; and

Fig. 4 shows diagrammatically an embodiment of apparatus for processing a further embodiment of memory card in accordance with the present invention.

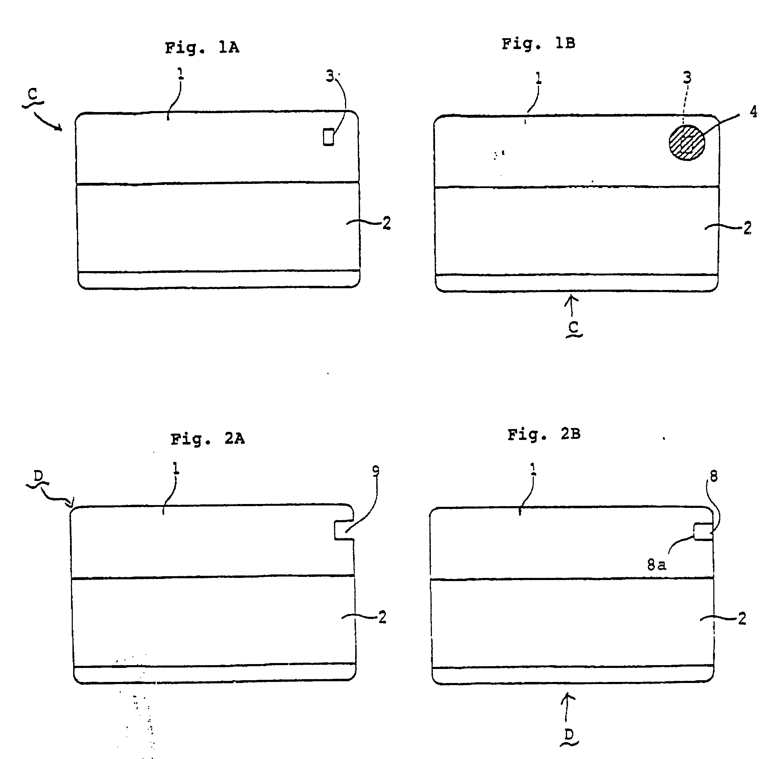

Figures 1A and 1B show a memory card according to the invention. The memory card C of Figs. 1A and 1B is of the magnetooptical type and comprises a body 1 which is made of a plastic material, and a striped recording region 2 formed in the body 1. The card body 1 has a generally rectangular plate-like shape. In this example, the recording region 2 includes a magnetooptical or phase transformation material such as TeC, GdTbFe(Co). Information can be optically recorded into or erased from the recording region 2 on the principle that optical properties of the material vary when irradiated by a laser beam in a magnetic field. A rectangular hole 3 is formed in one corner of the body 1. The size of the hole 3 is 3mm by 4 mm in a plan view.

As shown in Fig. 1B, the hole 3 can be covered by a seal 4 which is opaque against a light beam and is sufficiently large as compared with the size of the hole 3, thereby completely closing the hole 3. In this example, the state in which the hole 3 is open as shown in Fig. 1A indicates that the memory operation can be conducted (the enable state), and the state in which the hole 3 is closed by the seal 4 as shown in Fig. 1B indicates that the memory operation is prohibited (the prohibit state). When information stored in the card C is to be reserved, the holder of the card attaches the seal 4 to the hole 3 so as to prohibit the memory operation. When the card C is allowed to be subjected under the memory operation, the holder removes the seal 4 to open hole 3 again.

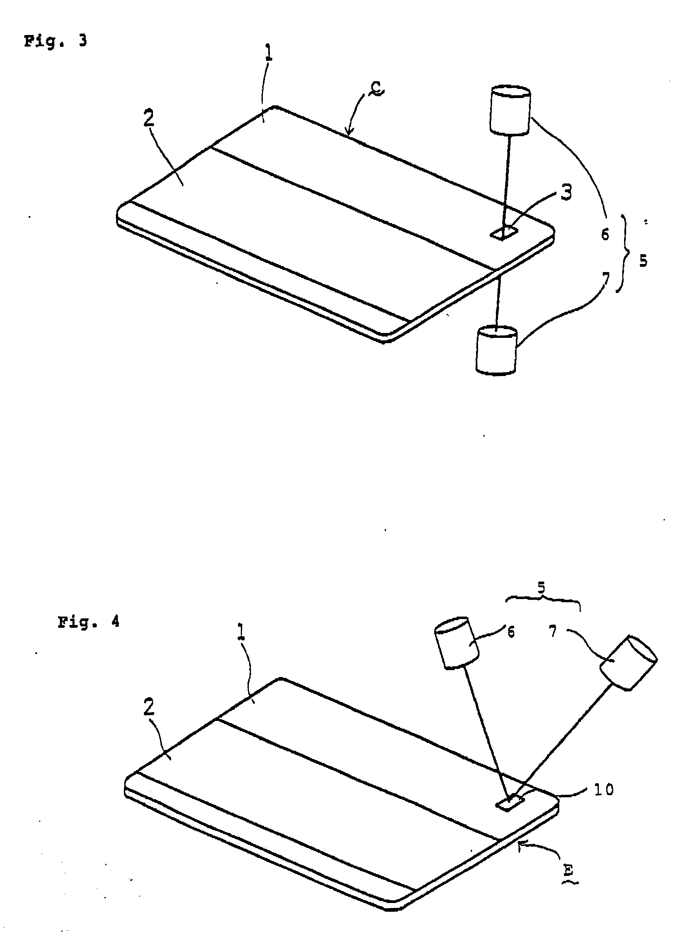

The card C is subjected to the memory operation in an apparatus for processing a memory card which apparatus is diagrammatically illustrated in Fig. 3. This apparatus comprises a detection means 5 having a light emitting element 6 such as an LED and a light receiving element 7 such as a photodiode. These elements 6 and 7 are positioned at each side of the card C, respectively, so that the light beam emitted from the element 6 impinges on the element 7. The output of the element 7 is supplied to a processing means (not shown) which judges a memory card to be in the enable state or in the prohibit state on the basis of the output of the element 7. When the card C is properly mounted in the apparatus, the hole 3 is positioned in the path of the light beam from the element 6.

When the card C in the enable state (Fig. 1A) is mounted in the apparatus as shown in Fig. 3, the light beam from the element 6 passes through the hole 3 to enter the element 7. The output signal of the element 7 is supplied to the processing means which judges the card C to be in the enable state and then waits for instructions for the memory operation. In contrast, when the card C in the prohibit state (Fig. 1B) is mounted in the apparatus, the light beam from the element 6 is intercepted by the seal 4 so that the light beam fails to reach the element 7. The processing means judges that the card C is in the prohibit state and prohibits the memory operation.

Another memory card according to the invention is shown in Figs. 2A and 2B. The card D of Figs. 2A and 2B comprises a tab-like portion 8 formed in one of the short edges of the body 1. At the base of the tab-like portion 8, notches 8a are formed so that, when the tab-like portion 8 is pressed, the tab-like portion 8 can be snapped off from the body 1, thereby forming a recess 9 as shown in Fig. 2A. When the memory operation (e.g., the record of information) is to be prohibited, the tab-like portion 8 is not snapped off and remains in its position so that the light beam from the element 6 is intercepted. When the memory operation is allowed to be conducted, the tab-like portion 8 is snapped off from the body 1 so that light beam from the element 6 can impinge on the element 7.

Figure 4 diagrammatically illustrates another apparatus according to the invention. The apparatus of Fig. 4 is designed to process a memory card E which has a recess 10 instead of the hole 3. In this apparatus, the light emitting element 6 and receiving element 7 are juxtaposed at the same side of the card E. The light beam of the element 6 is reflected from the recess 10 to the element 7 so that the processing means judges the card E to be in the enable state. When the card E is in the prohibit state, the holder of the card attaches to the recess 10 a seal (not shown) which is less reflective than the material of the body 1. The light beam of the element 6 reflected from the card E in the prohibit state fails to impinge on the element 7 so that the processing means judges the card E to be in the prohibit state.

In the above-described examples, the cards according to the invention comprise the hole 3, the tab-like portion 8 or the recess 10 as an indicating means which represents the state of a memory card (the enable state or the prohibit state). The structure of the indicating means is not restricted to these. For example, the indicating means can be realized in the form of one or more marks printed on the body 1 or in the form of digital or analog data stored in the recording region 2. In the former case, the indicating means is provided with removable cover means for covering the printed marks. In the latter case, it is preferable to construct the apparatus for processing the card so that the stored data indicating the state of the card can be read irrespective of the state of the card (i.e. the data can be read even when the card is in the prohibit state).

The recording region 2 may be made of a ferromagnetic material or comprises one or more LSIs.

It is understood that various other modifications will be apparent to and can be readily made by those skilled in the art without departing from the scope of this invention as defined by the appended claims.

## Claims

1. A memory card (C, D, E) comprising a memory medium (2) on which at least one of the record, reproduction and erasure of information can be conducted, characterised by an indicating means (3, 8, 9, 10) the state of which can be altered in accordance with the condition whether or not said memory medium (2) is permitted to be subjected to at least one of the record, reproduce and erase of information.

2. A memory card according to claim 1, wherein said indicating means comprises one or more holes (3).

3. A memory card according to claim 2, wherein said one or more holes (3) can be closed to show that said at least one of the record, reproduction and erasure of information is not permitted.

4. A memory card according to claim 1, wherein said indicating means comprises one or more tab-like pieces (8) which can be removed from said card.

5. A memory card accoding to claim 1, wherein said indicating means is formed in said memory medium (2).

6. A memory card according to claim 1, wherein said indicating means comprises one or more printed marks.

7. A memory card according to claim 6, wherein said indicating means further comprises a cover means for covering said printed marks.

8. A memory card according to any of claims 1 to 7, wherein said memory medium (2) consists of a magnetooptical material.

9. A memory card according to any of claims 1 to 7, wherein said memory medium (2) consists of a ferromagnetic material.

10. A memory card according to any of claims 1 to 7, wherein said memory medium (2) comprises a semiconductor memory.

11. Apparatus for processing a memory card (C, D, E) as claimed in any of claims 1 to 10, characterised by detection means (5) for detecting the state of said indicating means (3, 8, 9, 10).

Fig. 1A

Fig. 1B

Fig. 2A

Fig. 2B

Fig. 3

Fig. 4